# EUROPEAN PATENT SPECIFICATION

(11) **EP 1 711 856 B1**
(45) Date of publication and mention of the grant of the patent: **09.12.2009**
(21) Application number: 04791575.6
(22) Date of filing: 22.10.2004
(51) Int. Cl.: G02B 6/08, G02F 1/1335

(54) **A display with image guide and frame**
Anzeige mit Bildführung und Rahmen
Affichage avec guide d'image et cadre

(30) Priority: 04.12.2003 GB 0328163
(43) Date of publication of application: 18.10.2006
(73) Proprietor: Shearline Precision Engineering Limited, Ely Cambridgeshire CB7 4EX (GB)
(72) Inventor: GALLEN, Niall Anthony, Cambridge CB1 7TP (GB); LOWE, Anthony Cyril, The Square Braishfield Hampshire SO51 0PQ (GB); BAYLEY, Paul Andrew, Hereford HR4 0LJ (GB); SMARTT, Nicholas Patrick, Cambridge CB1 3LS (GB); GARBUTT, Benjamin David, Minsterworth, Gloucesterhire GL2 8JP (GB)
(74) Representative: Harris, David James
(86) International application number: PCT/GB2004/004496
(87) International publication number: WO 2005/054935

(56) References cited:
- WO-A-03/096117
- US-A- 4 139 261

## Description

This invention relates to displays.

The technology behind flat-panel displays, such as liquid crystal (LCD) or plasma displays, has advanced to the stage where a single display can be economically manufactured to about the screen size of a medium size domestic television set. To increase the display size of a single-unit display beyond this level introduces greater costs, lower manufacturing yields and other significant technical problems.

To provide larger displays, therefore, a hybrid technology has been developed whereby multiple smaller rectangular displays are tessellated to form the required overall size. For example, a 2 x 2 tessellated array of 15 inch diagonal displays, with appropriate addressing electronics to route pixel information to the appropriate sub-display, would provide a 30 inch diagonal display.

A drawback of this type of arrangement is that the active area of an individual display, that is to say, the area of the front face of the display on which pixel information is displayed, does not extend to the very edge of the physical area of the display. The technologies used, whether plasma, liquid crystal or other, require a small border around the edge of the active display area to provide interconnections to the individual pixel elements and to seal the rear to the front substrate. This border can be as small as a few millimetres, but still causes unsightly dark bands across a tessellated display.

Various solutions have been proposed to this problem, most of which rely on bulk optic or fibre optic image guides to translate or expand the image generated at the active area of the individual sub-displays.

For example, US-A-4 139 261 (Hilsum) uses a wedge structure image guide formed of a bundle of optical fibres to expand the image generated by a panel display so that by abutting the expanded images, the gap between two adjacent panels, formed of the two panels' border regions, is not visible. The input end of each fibre is the same size or less than a pixel element. The optical fibres are aligned, at their input ends, with individual pixel elements of the panel display, so that the pixel structure of the display is carried over to the output plane of the image expander. Other image guides formed in this way may translate the image to provide a border-less abutment between a pair of adjacent panels. Various types of light transmission guide may be used, such as rigid or semi-rigid light transmission guides. It has been proposed that the image guides could be fabricated from polymer materials, for ease of manufacture.

When in use, ambient light from outside a display striking the viewing surface of the described display screens may be guided down the image guide into the display apparatus. A portion of this light may be reflected at the channel/air interface at the input ends of the image guide due to Fresnel reflections and will be guided back out through the image guide to the viewer, thereby undesirably reducing the contrast of the displayed image.

WO03/096117 describes a display comprising a display device having an image output surface at which an image is displayed as a spaced array of pixel elements, an image guide coupled to the image output surface of the display device and comprising a plurality of light transmission guides each having an input end and an output end, the input ends of the light transmission guides being arranged relative to one another so that groups of one or more light transmission guides receive light from respective groups of one or more pixel elements, in which, for a cluster comprising at least a subset of the light transmission guides, at the outer periphery of the cluster, the input ends of the light transmission guides are surrounded by an inner frame having optical properties substantially similar to the optical properties of the light transmission guides and having an input surface arranged to receive light from the image output surface of the display device, and an outer frame having thermal expansion properties substantially similar to the thermal expansion properties of the light transmission guides, the inner frame being optically coupled to each light transmission guides adjacent thereto and comprising a layer covering the surfaces of the inner frame adjacent to the outer frames and the surfaces of the inner frame opposite to the input surface of the inner frame.

In order to allow the input of an image guide to be aligned correctly with a large array of pixel elements on a panel display, it is appropriate that the input ends of the light transmission guides are maintained in the correct relative positions, often as a rectangular array of pixel positions. Whatever means is used for registering the input ends of the light transmission guides in their correct relative positions, a problem can arise when the temperature of the display arrangement changes.

Most commonly, panel displays are fabricated of glass or a closely related material. The surface of the panel display may have a thin layer or film of another material coupled (e.g. adhered) to it (for instance polarising filters for a Liquid Crystal (LC) display). This layer may have different thermal expansion properties to those of the underlying surface. Of course the skilled person will understand that where this is the case, the layer will expand or contract (e.g. stretch or compress) with the underlying surface when the underlying surface expands in response to temperature variations. Image guides proposed so far tend to use polymer materials for the light transmission guides and/or for an arrangement (if one is used) for registering the input ends of the light transmission guides in the correct relative positions. A problem therefore arises because the thermal expansion properties of glass and polymer materials are different.

Consider an example display where the different thermal expansions of the input end of the image guide and of the display substrate mean that the image guide has expanded across its width by one pixel-width more than the panel substrate. This could have two major effects on the image displayed at the output of the image guide.

The first is a change to the spatial resolution of the display. At positions within the display area, some light transmission guides could be receiving substantially equal amounts of light from two adjacent pixel elements. This has a low-pass spatial filtering effect on the displayed image, and this effect will vary across the display area.

The second is that the outermost light transmission guides will be receiving no light at all, as they will have expanded beyond the display area of the panel. This will cause an unsightly dark line at the output of the image guides.

An aspect of the invention provides a display comprising a display device having an image output surface at which an image is displayed as a spaced array of pixel elements, an image guide coupled to the image output surface of the display device and comprising a plurality of light transmission guides each having an input end and an output end, the input ends of the light transmission guides being arranged relative to one another so that groups of one or more light transmission guides receive light from respective groups of one or more pixel elements, in which, for a cluster comprising at least a subset of the light transmission guides, at the outer periphery of the cluster, the input ends of the light transmission guides are surrounded by an inner frame having optical properties substantially similar to the optical properties of the light transmission guides and having an input surface arranged to receive light from the image output surface of the display device, and an outer frame having thermal expansion properties substantially similar to the thermal expansion properties of the light transmission guides, the inner frame being optically coupled to each light transmission guide adjacent thereto and comprising a reflective layer covering at least the surfaces of the inner frame opposite to the input surface of the inner frame and the surfaces of the inner frame adjacent to the outer frame, light entering the inner frame and impinging on the reflective layer being reflected to exit the inner frame via the portion of the inner frame optically coupled to adjacent light transmission guides or via the input face of the inner frame.

This arrangement advantageously improves the optical performance of an array of light transmission guides bounded by an optically similar frame which is bounded in turn by another, optically dissimilar frame. The reflective layer serving to recycle, rather than absorb, light entering the optically similar frame, and also serving to increase design freedom by making the operation of the light transmission guides and the inner frame independent of the optical properties of the outer frame.

The front of a tiled display screen is composed of a number of image guides, each image guide comprising a plurality of light transmission guides, which may be composed of a polymeric substance. In order to construct large tiled arrays, a rigid framework should preferably be provided to support the image guides and maintain them in close alignment. The typical materials (e.g. polymers) used to make the image guides are not ideal materials from which to construct this structure due to relatively low stiffness, poor long-term stability, and the large cross-sectional area which would be required to provide sufficient rigidity to a large display screen. A metal or reinforced plastic framework is a more suitable solution, but the different coefficient of thermal expansion would mean the stresses on the front viewing surface due to thermal expansion could be excessive.

If a more rigid material with a substantially different coefficient of thermal expansion is to be employed, a means is required to support and accurately align the image guides without imposing excessive internal stresses on the front viewing surface or the supporting framework.

The front face of the individual image guides should preferably be held to tight tolerances in a single plane, to ensure there is no visible step between the front faces of the different image guides. Even a small variation from the nominal plane of the front viewing surface could be seen by eye as a seam between the display modules.

Furthermore, the image guides should preferably be constrained in such a way as to prevent gaps opening up between image guides over the working temperature range of the display.

Embodiments of the invention will now be described, by way of example only, with reference to the accompanying drawings in which:
Figure 1 is a schematic isometric rear view of a tiled array of display panels;
Figure 2 is a schematic isometric front view of the array of Figure 1;
Figure 3 is a schematic side view of a display comprising a light source, a collimator/homogeniser, a display panel and an image guide;
Figure 4 schematically illustrates a portion of an image guide comprising light transmission guides and bordered by a frame;
Figure 5 is a schematic side view of the image guide and frame of Figure 13;
Figure 6A schematically illustrates inner and outer frames surrounding an image guide, the inner frame being composed of a continuous sheet of material;
Figure 6B schematically illustrates inner and outer frames surrounding an image guide, the inner frame being composed of a series of truncated light transmission guides;
Figure 7 schematically illustrates the optical characteristics of a plurality of light transmission guides bordered by an inner frame having an absorbing layer at its output end, the inner frame being isolated from the outer frame;
Figure 8 schematically illustrates the optical characteristics of a plurality of light transmission guides bordered by an inner frame having an absorbing layer at its output end, the inner frame being fixed into the outer frame;
Figure 9 schematically illustrates the optical characteristics of a plurality of light transmission guides ordered by an inner frame having a reflective layer covering all its surfaces except those surfaces being coupled to the light transmission guides and the input surface of the inner frame;

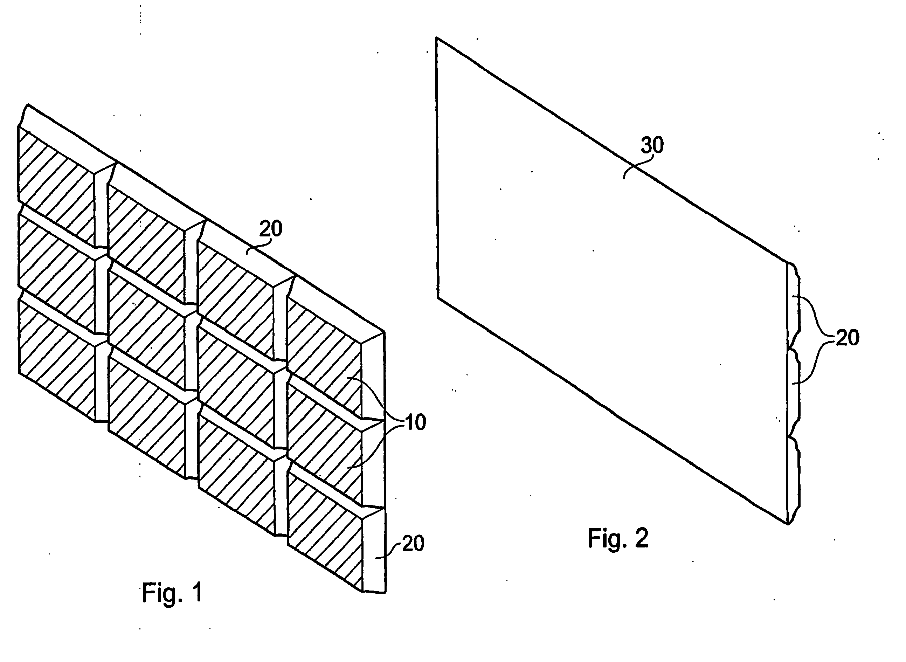

Figure 1 is a schematic isometric rear view of a tiled array of display panels.

The array comprises four display panels in a horizontal direction and three display panels in a vertical direction. Each display panel comprises a light emitting surface 10 and an image guide 20.

The light emitting surfaces 10 are each arranged as a plurality of pixels or picture elements. In practice, they would include, for example, a back light arrangement, focusing, collimating and/or homogenising optics and a liquid crystal panel or the like, but much of this has been omitted for clarity of the diagram.

The light emitting panels each display portions of an overall image to be displayed. The portions represent adjacent tiles in a tessellated arrangement. However, because of the need to run electrical connections and physical support around the edge of the light emitting surfaces 10, they cannot be directly abutted without leaving a dark band or "black matrix" in between. So, the light guides 20 are used to increase the size of the image from each light emitting surface 10 so that the output surfaces of the light guides 20 can be abutted to form a continuous viewing plane.

This arrangement is shown in Figure 2 which is a schematic isometric front view of the array of Figure 1. Here, the output surfaces of the light guides 20 abut so as to form a substantially continuous viewing surface 30.

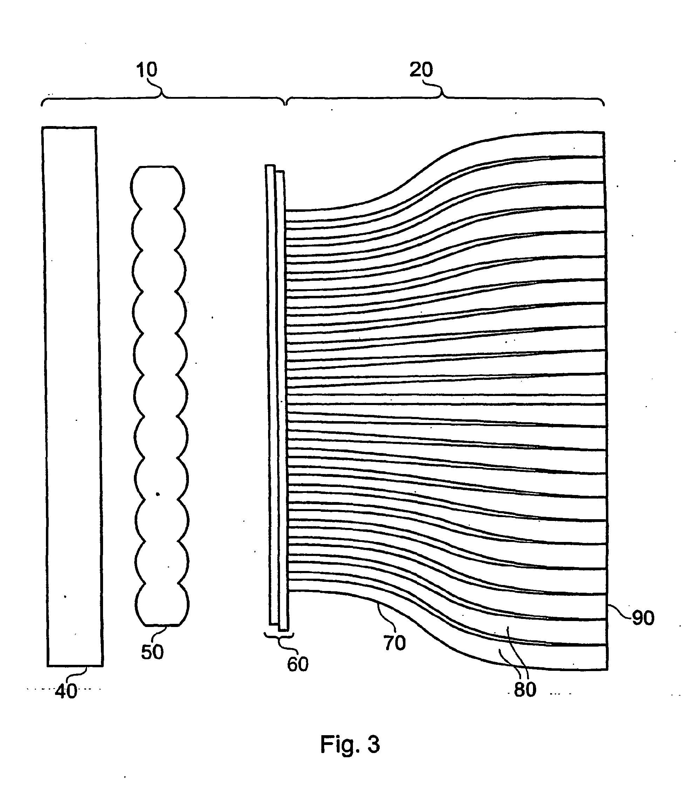

Figure 3 is a schematic side view of a display comprising a light source 40, a collimator/homogeniser 50, a liquid crystal panel 60 and a light guide 70.

The light source 40 and the homogeniser 50 are shown in highly schematic form but in general terms are arranged to provide the back light required by the liquid crystal panel 60.

The liquid crystal panel 60 may be of a type which uses a white or other visible colour back light and provides liquid crystal picture elements to modulate that back light for that display. Alternatively, the liquid crystal panel 60 may be a photo luminescent panel which employs an ultra-violet back light and modulates the ultra-violet light onto an array of phosphors to generate visible light for display. Of course, many other types of light emitting surface 10 may be used such as an organic light emitting diode array.

The image guide 70 comprises an array of light transmission guides 80, each of which carries light from a particular area on the liquid crystal panel 60 to a corresponding particular area on an output surface 90. In doing so, the light transmission guides are arranged to diverge so that the area covered on the output surface 90 is physically larger than the image display area on the liquid crystal panel 60. This, as described above, allows an array of displays as shown in Figure 3 to be abutted without an unsightly black matrix at the viewing plane.

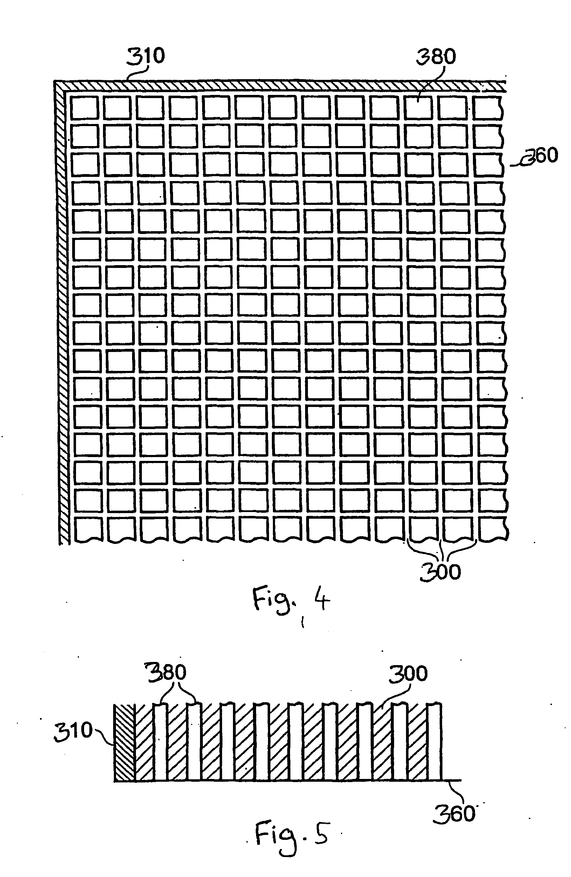

Referring to Figures 4 and 5 which schematically illustrate plan and side views of an array of light transmission guides respectively, each light transmission guide 380 overlies a respective pixel element, although other arrangements such as multiple pixel elements per light transmission guide 380, or multiple light transmission guides 380 per pixel element, are of course possible. The light transmission guides 380 are separated by gaps 300 which are preferably filled with a low refractive index adhesive. It can be seen that the array of light transmission guides 380, which together make up an image guide, are surrounded by a frame 310 which may be coupled to the array of light transmission guides 380 by any suitable method, for instance an adhesive.

In normal operation, a certain amount of light may propagate from one light transmission guide 380 to an adjacent light transmission guide. This may be due in particular to either or both of the following behaviours: Firstly, some light may propagate at large angles with respect to the walls of the light transmission guides, and in particular exceeding the critical angle for total internal reflection at the interface between a light transmission guide 380 and the adhesive filling the gaps 300 and being transmitted into an adjacent fibre. Secondly, some light may be incident on a fibre adjacent to the one intended because of a finite gap which may exist between the input ends of the light transmission guides 380 and the image output surface 360. Such behaviour is undesirable, but is difficult to control.

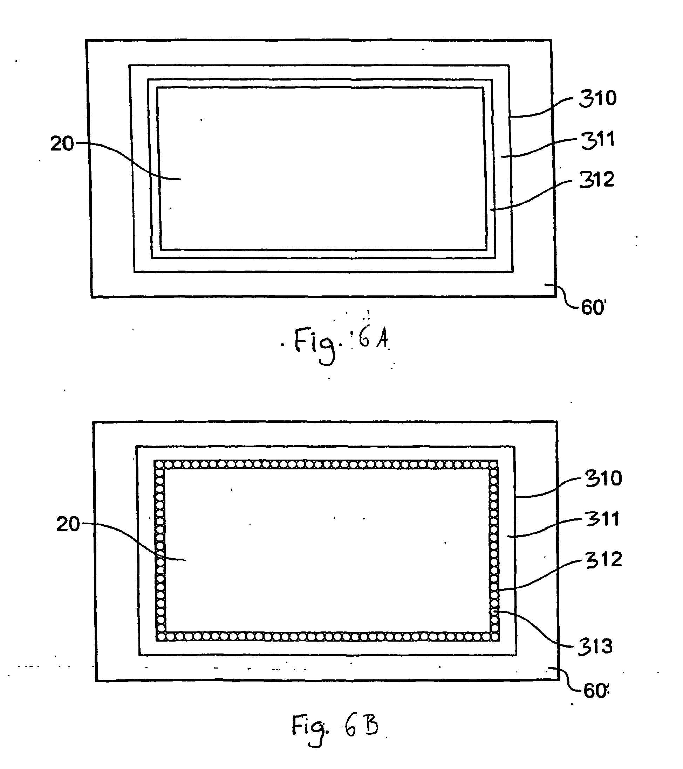

In order that luminance variations between central and peripheral regions of the image guide are reduced, the means by which the frame 310 is attached to the outermost light transmission guides of the image guide 20 will aim to conserve the optical characteristics that exist between non-peripheral fibres in the array. Example arrangements which seek to address this issue are illustrated in Figures 6A and 6B. The frame 310 comprises both an outer frame 311, and an inner frame 312 of a material having substantially similar optical characteristics to the light transmission guides and being coupled to the peripheral light transmission guides (i.e. those adjacent to the frame) in a manner that is optically substantially identical to the manner in which the light transmission guides 380 are attached to each other is provided. The inner frame 312 is sandwiched between the outer row of light transmission guides 380 and the outer frame 311 (which lends rigidity to the structure). The inner frame 312 could for instance take the form of a continuous boundary of material surrounding all sides of the array or could comprise an additional boundary of light transmission guides 313 around the array. The additional boundary of light transmission guides 380 could have a thickness of a single light transmission guide 380, or alternatively could have a thickness of two or more light transmission guides 380, arranged into rows of light transmission guides 380 along each edge of the inner frame 312. In the former case, the continuous boundary of material will not extend to the plane of the output ends of the light transmission guides. In the latter case, the additional light transmission guides 313 would be truncated so as not to reach the plane of the output ends of the light transmission guides 380. The outer frame 311 may have the same or similar or different optical characteristics to the light transmission guides 380. Preferred arrangements of the outer frame 311 may be operable to support the array of light transmission guides 380, prevent misregistration of the light transmission guides with respect to underlying pixel elements of a display device 60, and to join arrays of light transmission guides 380 together into a tiled arrangement.

Light entering into the inner frame 312 should be prevented or at least inhibited from exiting the inner frame 312 in a manner that would degrade the visual properties of the display.

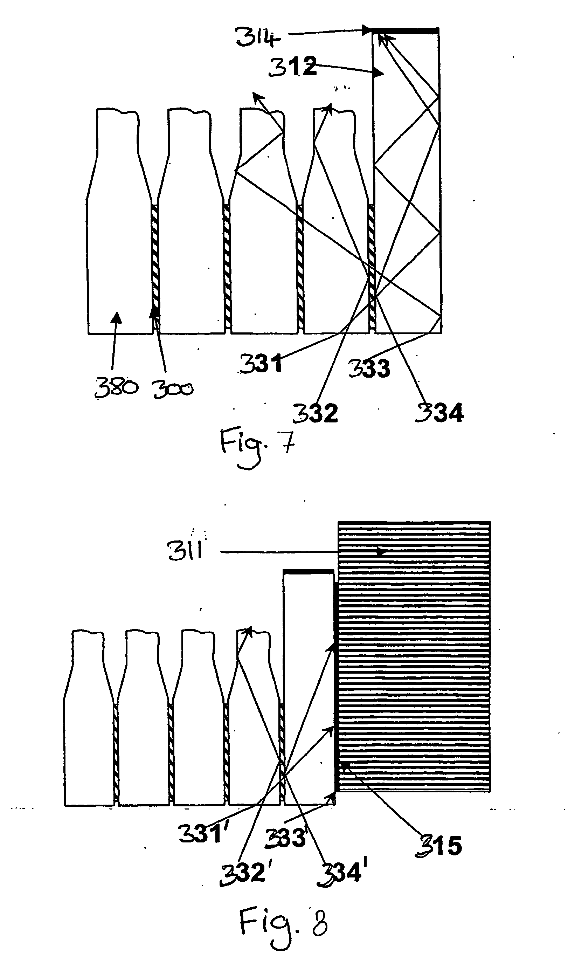

Figure 7 schematically illustrates a mechanism for preventing or inhibiting the exiting of light from the inner frame. Where the inner frame 312 comprises truncated light transmission guides, these have their truncated ends covered (e.g. coated) with a light absorbing layer 314, and where the inner frame 312 comprises a continuous boundary of material, the edge farthest from the input face of the light transmission guides 380 is covered (e.g. coated) with a light absorbing layer 314. The light absorbing layer 314 in either case substantially prevents the propagation of light beyond the end of the inner frame.

The optical paths taken by light entering the inner frame 312 in the absence of an outer frame 311 are shown in Figure 7 by schematic rays 331, 332, 333 and 334. Ray 331 enters the inner frame 312 through the coupling between the inner frame 312 and an adjacent light transmission guide 380. Schematic ray 331 is internally reflected by the inner frame 312 and eventually absorbed by the light absorbing layer 314.

Ray 332, which strikes the input surface of the image guide at a smaller angle than line 331, does not enter the inner frame 312.

Ray 333, which enters the inner frame 312 through the input end of the inner frame 312, is internally reflected and exits the inner frame 312 through the coupling between the inner frame 312 and an adjacent light transmission guide 380, pass into the adjacent light transmission guide 380, and to pass into another light transmission guide 380.

Ray 334, which also enters the inner frame 312 through the input end of the inner frame 312, and is internally reflected by the inner frame 312 and eventually absorbed by the light absorbing layer 314.

Figure 8 schematically illustrates the operation of the mechanism of Figure 7 when fixed into an outer frame 311. The optical paths taken by light entering the inner frame 312 when the inner frame 312 is coupled into an outer frame 311 are shown in Figure 8 by schematic rays 331', 332', 333' and 334'.

It can be seen that schematic rays 331', 333' and 334', all of which impinge on a portion of the inner frame 312 in contact with the outer frame 311, are absorbed upon contact with the interface between the inner frame 312 and the outer frame 311. Ray 332', which does not impinge on this interface, is unaffected by the presence of the outer frame 311.

As described above, the outer frame 311 is made of a structurally strong material, which for reasons of system optical performance is preferably optically absorbing. The preferred method of attaching the inner frame 312 and the outer frame 311 together is by means of a layer of adhesive 315. However, as can be seen from Figure 8, less light is propagated by the inner frame 312 when it is attached to the outer frame 311.

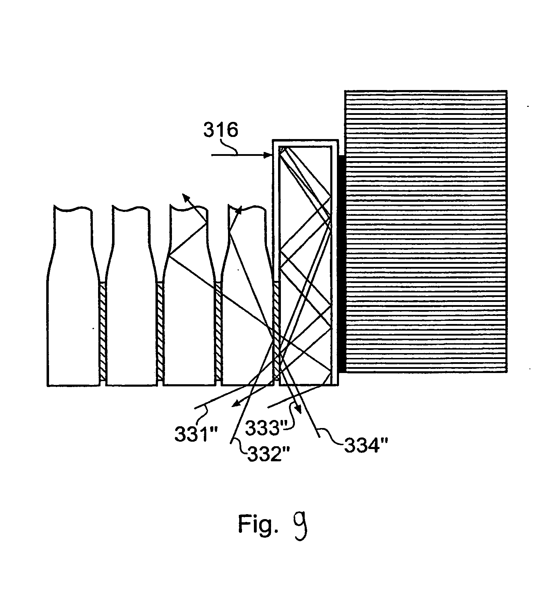

Figure 9 schematically illustrates an alternative arrangement according to the present invention which seeks to overcome these disadvantages. A comparison of Figures 8 and 9 shows that the light blocking layer 314 has been removed and replaced with a reflective layer 316. The reflective layer covers substantially all of the surfaces of the inner frame 312 other than the input surface and the portion of the inner frame 312 in contact with the adhesive layers coupling the inner frame 312 to adjacent light transmission guides 380. The improvement in optical performance can be seen in schematic rays 333", which now follows the same path as in Figure 7 and in schematic rays 331" and 334" which are reflected several times and re-emerge from the entrance face of the inner frame 312 or adjacent light transmission guides 380, possibly to be recycled, improving the luminous efficiency of the system.

Another advantage of this arrangement is that it enables the properties of the outer frame 311 and the adhesive used to attach it to the inner frame 312, are made completely independent of the optical properties of the device.

The reflective layer 316 can either be deposited as a metal layer onto the inner frame 312, or could be applied in the form of a metallic adhesive tape.

## Claims

1. A display comprising:
a display device having an image output surface (360) at which an image is displayed as a spaced array of pixel elements;
an image guide (20) coupled to the image output surface of the display device and comprising a plurality of light transmission guides (380) each having an input end and an output end, the input ends of the light transmission guides being arranged relative to one another so that groups of one or more light transmission guides receive light from respective groups of one or more pixel elements;
in which, for a cluster comprising at least a subset of the light transmission guides:
at the outer periphery of the cluster, the input ends of the light transmission guides are surrounded by an inner frame (312) having optical properties substantially similar to the optical properties of the light transmission guides and having an input surface arranged to receive light from the image output surface of the display device, and an outer frame (311) having thermal expansion properties substantially similar to the thermal expansion properties of the light transmission guides,
the inner frame (312) being optically coupled to each light transmission guide (380) adjacent thereto and comprising a layer 316 covering at least the surfaces of the inner frame opposite to the input surface of the inner frame and the surfaces of the inner frame adjacent to the outer frame the display being **characterised in that** the layer is a reflective layer such that, light entering the inner frame and impinging on the reflective layer (316) is reflected to exit the inner frame via the portion of the inner frame optically coupled to adjacent light transmission guides or via the input face of the inner frame.

2. A display according to claim 1, wherein the inner frame comprises a plurality of light transmission guides, the reflective coating covering substantially all surfaces of each light transmission guide in the inner frame other than the portion of each light transmission guide in the inner frame optically coupled to adjacent light transmission guides, and the input face of each light transmission guide in the inner frame.

3. A display according to claim 2, wherein the plurality of light transmission guides in the inner frame are formed into a plurality of adjacent rows along each side of the inner frame, each row being optically coupled to an adjacent row.

4. A display according to claim 2 or claim 3, wherein the light transmission guides in the inner frame are truncated at their output end.

5. A display according to claim 1, wherein the inner frame comprises a continuous boundary of material.

6. A display according to any one of claims 1 to 5, wherein the reflective layer is a deposited metal layer.

7. A display according to any one of claims 1 to 5, wherein the reflective layer is a metallic adhesive tape.

## Patentansprüche

1. Anzeige, umfassend:
eine Anzeigevorrichtung, die eine Bildausgabefläche (360) hat, auf der ein Bild als Anordnung von Pixelelementen mit Abständen angezeigt wird;
einen Bildleiter (20), der mit der Bildausgabefläche der Anzeigevorrichtung gekoppelt ist und eine Vielzahl von Lichtübertragungsleitern (380) umfasst, von denen jeder ein Eingangsende und ein Aus-gangsende hat, wobei die Eingangsenden der Lichtübertragungsleiter zueinander so angeordnet sind, dass Gruppen von einem oder mehreren Lichtübertragungsleitern Licht von jeweiligen Gruppen aus einem oder mehreren Pixelelementen empfangen;
wobei für ein Bündel, das mindestens eine Teilmenge der Lichtübertragungsleiter umfasst:
die Eingangsenden der Lichtübertragungsleiter an der äußeren Peripherie des Bündels von einem inneren Rahmen (312) umgeben sind, der optische Eigenschaften hat, die im Wesentlichen ähnlich den optischen Eigenschaften der Lichtübertragungsleiter sind, und der eine Eingangsfläche hat, die angeordnet ist, Licht von der Bildausgabefläche der Anzeigevorrichtung zu empfangen, sowie von einem äußeren Rahmen (311), der thermische Ausdehnungseigenschaften hat, die im Wesentlichen ähnlich den thermischen Ausdehnungseigenschaften der Lichtübertragungsleiter sind,
wobei der innere Rahmen (312) optisch mit jedem ihm benachbarten Lichtübertragungsleiter (380) gekoppelt ist und eine Schicht (316) umfasst, die zumindest die Flächen des inneren Rahmens gegenüber der Eingangsfläche des inneren Rahmens und die an den äußeren Rahmen angrenzenden Flächen des inneren Rahmens bedeckt,
wobei die Anzeige **dadurch gekennzeichnet ist, dass** die Schicht eine reflektierende Schicht ist, sodass in den inneren Rahmen eintretendes und auf die reflektierende Schicht (316) auftreffendes Licht reflektiert wird, sodass es den inneren Rahmen über den Teilbereich des inneren Rahmens, der optisch mit angrenzenden Lichtübertragungsleitern gekoppelt ist, oder über die Eingangsfläche des inneren Rahmens verlässt.

2. Anzeige nach Anspruch 1, wobei der innere Rahmen eine Vielzahl von Lichtübertragungsleitern umfasst, wobei die reflektierende Schicht im Wesentlichen alle Flächen jedes Lichtübertragungsleiters im inneren Rahmen bedeckt, außer dem mit angrenzenden Lichtübertragungsleitern optisch gekoppelten Teilbereich jedes Lichtübertragungsleiters im inneren Rahmen und der Eingangsfläche jedes Lichtübertragungsleiters im inneren Rahmen.

3. Anzeige nach Anspruch 2, wobei die Vielzahl von Lichtübertragungsleitern im inneren Rahmen zu einer Vielzahl von angrenzenden Reihen entlang jeder Seite des inneren Rahmens ausgebildet sind, wobei jede Reihe optisch mit einer angrenzenden Reihe gekoppelt ist.

4. Anzeige nach Anspruch 2 oder Anspruch 3, wobei die Lichtübertragungsleiter im inneren Rahmen an ihrem Ausgangsende gestutzt sind.

5. Anzeige nach Anspruch 1, wobei der innere Rahmen eine durchgehende Materialabgrenzung umfasst.

6. Anzeige nach einem der Ansprüche 1 bis 5, wobei die reflektierende Schicht eine abgeschiedene Metallschicht ist.

7. Anzeige nach einem der Ansprüche 1 bis 5, wobei die reflektierende Schicht ein metallenes Klebeband ist.

## Revendications

1. Affichage comprenant :
un dispositif d'affichage ayant une surface de sortie d'image (360) sur laquelle une image est affichée sous la forme d'une matrice espacée d'éléments pixels ;
un guide d'image (20) couplé à la surface de sortie d'image du dispositif d'affichage et comprenant une pluralité de guides de transmission de lumière (380) ayant chacun une extrémité d'entrée et une extrémité de sortie, les extrémités d'entrée des guides de transmission de lumière étant agencées les unes par rapport aux autres de sorte que des groupes d'un ou plusieurs guides de transmission de lumière reçoivent la lumière de groupes respectifs d'un ou plusieurs éléments pixels ;
dans lequel, pour un amas comprenant au moins un sous-ensemble des guides de transmission de lumière :
sur la périphérie extérieure de l'amas, les extrémités d'entrée des guides de transmission de lumière sont entourées par un cadre interne (312) ayant des propriétés optiques sensiblement similaires aux propriétés optiques des guides de transmission de lumière et ayant une surface d'entrée agencée pour recevoir la lumière de la surface de sortie d'image du dispositif d'affichage, et un cadre externe (311) ayant des propriétés de dilatation thermique sensiblement similaires aux propriétés de dilatation thermique des guides de transmission de lumière,
le cadre interne (312) étant couplé optiquement à chaque guide de transmission de lumière (380) adjacent à celui-ci et comprenant une couche (316) couvrant au moins les surfaces du cadre interne opposées à la surface d'entrée du cadre interne et les surfaces du cadre interne adjacentes au cadre externe, l'affichage étant **caractérisé en ce que** la couche est une couche réflective de telle sorte que la lumière entrant dans le cadre interne et venant heurter la couche réflective (316) est réfléchie pour sortir du cadre interne via la partie du cadre interne couplée optiquement aux guides de transmission de lumière adjacents ou via la face d'entrée du cadre interne.

2. Affichage selon la revendication 1, dans lequel le cadre interne comprend une pluralité de guides de transmission de lumière, le revêtement réflecteur couvrant sensiblement toutes les surfaces de chaque guide de transmission de lumière dans le cadre interne autres que la partie de chaque guide de transmission de lumière dans le cadre interne couplée optiquement aux guides de transmission de lumière adjacents, et la face d'entrée de chaque guide de transmission de lumière dans le cadre interne.

3. Affichage selon la revendication 2, dans lequel la pluralité de guides de transmission de lumière dans le cadre interne sont formés en une pluralité de rangées adjacentes le long de chaque côté du cadre interne, chaque rangée étant couplée optiquement à une rangée adjacente.

4. Affichage selon la revendication 2 ou la revendication 3, dans lequel les guides de transmission de lumière dans le cadre interne sont tronqués à leur extrémité de sortie.

5. Affichage selon la revendication 1, dans lequel le cadre interne comprend une limite continue de matière.

6. Affichage selon l'une quelconque des revendications 1 à 5, dans lequel la couche réflective est une couche de métal déposé.

7. Affichage selon l'une quelconque des revendications 1 à 5, dans lequel la couche réflective est un ruban adhésif métallique.
